# EUROPEAN PATENT APPLICATION

(11) **EP 1 962 176 A1**
(43) Date of publication of application: **27.08.2008**
(21) Application number: 07003783.3
(22) Date of filing: 23.02.2007
(51) Int. Cl.: G06F 3/048

(54) **Graphical user interface and method thereof**

(71) Applicant: SIEMENS AKTIENGESELLSCHAFT, 80333 München (DE)
(72) Inventor: Shantanu, Bhattacharya, 560 076 Bangalore (IN)

(57) **Abstract**

The present invention relates to a graphical user interface in a computer system. The GUI comprises a window (42) containing a plurality of user interface controls. The proposed GUI also includes means for grouping a set of user interface controls (44, 46, 48, 50), from amongst said plurality of user interface controls, into a single control pane (40) in response to a first user input. The GUI further comprises means for displaying said control pane (40) within said window (42). The means for displaying is adapted to display said control pane (40) in any one of an expanded configuration (100) and a folded configuration (200), depending upon a second user input. The expanded configuration (100) displays said control pane (40) with user interface controls (44, 46, 48, 50) that are contained in the control pane (40), while the folded configuration (200) displays the control pane (40) in a minimized form along with a control pane identifier (52).

## Description

The present invention relates to graphical user interfaces and to a method for providing a graphical user interface.

Graphical user interfaces are typically based on graphic display technology that employs pictorial representations, typographic-styled text and other graphical representations on a display screen of a computer system. A graphical user interface (GUI) includes a window environment that configures the screen to resemble a graphical display for a user to enter or view information. Generally, an application program executing on the computer system presents the information to the user through a window by drawing images, graphics or text within the window region. The user, in turn, communicates with the application by 'pointing' at controls within the window region via a user input means, such as a mouse.

However, a GUI is limited by the available space on a computer screen, as well as the amount of data that a user's mind can focus on at a given time. There are times when a GUI screen may need to have more number of fields than a computer screen can accommodate or human intelligence can grasp at an instant. In addition to this, there could also be a scenario where the end user would like to regroup the controls from what is available from the GUI designer. In such cases the GUI screen becomes either too complicated or is forcibly broken down into multiple screens.

It is an object of the present invention to provide an improved graphical user interface.

The above object is achieved by a graphical user interface, comprising:
- a window containing a plurality of user interface controls,
- means for grouping a set of user interface controls, from amongst said plurality of user interface controls, into a single control pane in response to a first user input, and
- means for displaying said control pane within said window, wherein, said means for displaying is adapted to display said control pane in any one of an expanded configuration, displaying said control pane with user interface controls that are contained in the control pane, and a folded configuration, displaying said control pane in a minimized form along with a control pane identifier, depending upon a second user input.

The above object is achieved by a method for providing a graphical user interface, comprising:
- generating a window containing a plurality of user interface controls and displaying said window on a display screen of said computer system,
- in response to a first user input, generating a control pane containing a group of user interface controls, from amongst said plurality of user interface controls, and
- displaying said control pane within said window in an expanded or a folded configuration depending upon a second user input, wherein said expanded configuration displays the control pane along with user interface controls that are contained in the control pane, and said folded configuration displays the control pane in a minimized form along with a control pane identifier.

The underlying idea of the present invention is to provide a graphical user interface capable of having large number of controls while taking into account the limitations of the available space on the computer screen and the amount of data processed by the user's mind at a given instant. The proposed technique also allows the user to organize or regroup the controls from what is available from the user interface designed.

In one embodiment, the expanded configuration of said control pane comprises a resizable rectangular area within said window. This facilitates moving of a control that is adjacent to the control pane into the control pane, by dragging and resizing said rectangular area over the adjacent control.

In a specific embodiment, the expanded configuration of said control pane comprises a vertical and/or horizontal scroll bar configured to facilitate complete display of the user interface controls contained in said control pane. The advantage of this feature is that multiple control panes can be expanded in a window at the same time, as use of the vertical and/or horizontal scroll bars reduces the size of an expanded control pane necessary for complete display of all the controls contained therein.

In a preferred embodiment of the present invention, the graphical user interface further comprises means for moving a user interface control that is outside and adjacent to said control pane into said control pane based upon a third user input, and means for moving a user interface control at a periphery of said control pane out of said control pane based upon a fourth user input. This feature simplifies the implementation of the proposed technique by obviating major modifications to the existing windows display.

The present invention is further described hereinafter with reference to illustrated embodiments shown in the accompanying drawings, in which:
- FIG 1: is a block diagram of a computer system on which the present invention may advantageously operate,
- FIG 2: illustrates a control pane in an expanded configuration,
- FIG 3: illustrates a control pane in a folded configuration
- FIG 4: is a schematic diagram illustrating moving of a control into a control pane according to aspects of the present invention, and
- FIG 5: is a schematic diagram illustrating removing of a control out of a control pane according to aspects of the present invention.

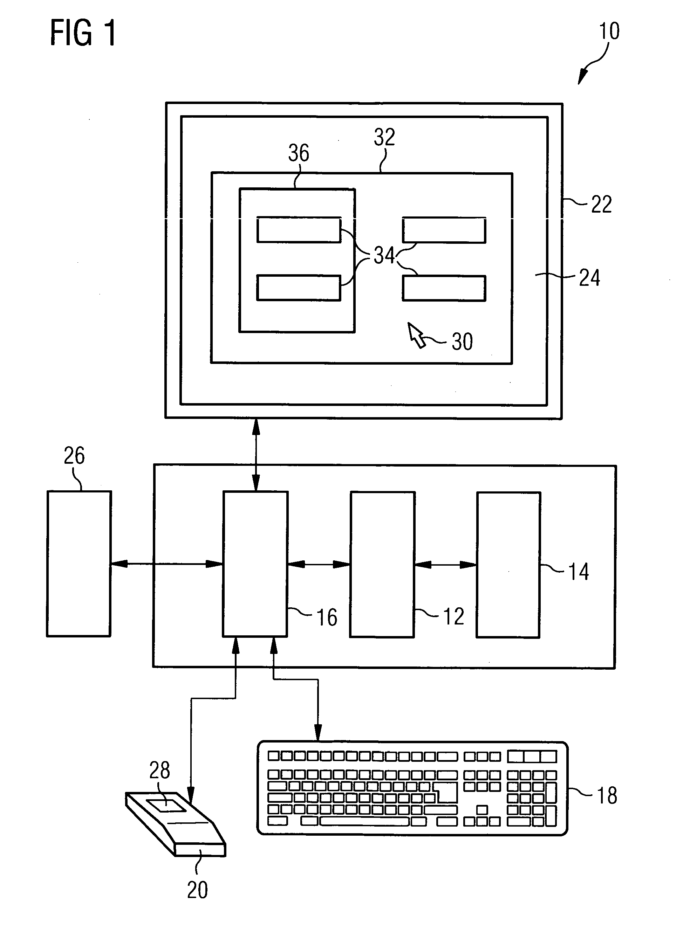

FIG 1 illustrates a computer system 10 wherein aspects of the proposed graphical user interface may be incorporated. The computer system 10 typically comprises a central processing unit (CPU) 12, a memory 14 and input/output (I/O) circuitry 16. The memory 14 typically comprises random access memory (RAM) for temporary storage of information, including an application program (not shown), and read only memory (ROM) for permanent storage of the computer's configuration and basic operating commands, such as portions of an operating system (not shown). As will be understood, the application program and operating system interact to control the operations of the CPU 12 and computer system 10.

The I/O circuitry 16 is, in turn, connected to input devices, such as a keyboard 18 and a mouse 20. An output device, such as a conventional display monitor 22 having a display screen 24 is also connected to I/O circuitry 16. In operation, the I/O circuitry 16 receives information, such as control and data signals, from the mouse 20 and the keyboard 18, and provides that information to the CPU 12 for display on the screen 24, or for storage on a mass storage unit 26, such as a hard disk. It is to be understood that the I/O circuitry 16 accordingly contains the necessary hardware, e.g., buffers and adapters, needed to interface with the mouse 20, the keyboard 18 and the display monitor 22. The mouse 20 typically contains at least one button switch 28 operated by a user of the system. A cursor 30 is displayed on the screen 24 and its position is controllable via the mouse 20 or the keyboard 18, as is well known.

The illustrated graphical user interface includes a window environment displayed on the screen 24. The window environment typically includes one or more windows 32, each of which may contain a plurality of user interface (UI) controls 34, each UI control 34 covering a portion of a window 32. A UI control is a unit of a graphical user interface used to input or output data from the application to the end user of the application. Examples of UI controls include text box, drop down list, text area, picture control, list box, radio buttons, check boxes, among others. A user may communicate data with the application program by accessing a desired UI control, for example, by dragging the cursor 30 with the mouse 20 to the location of the desired UI control on the screen 24.

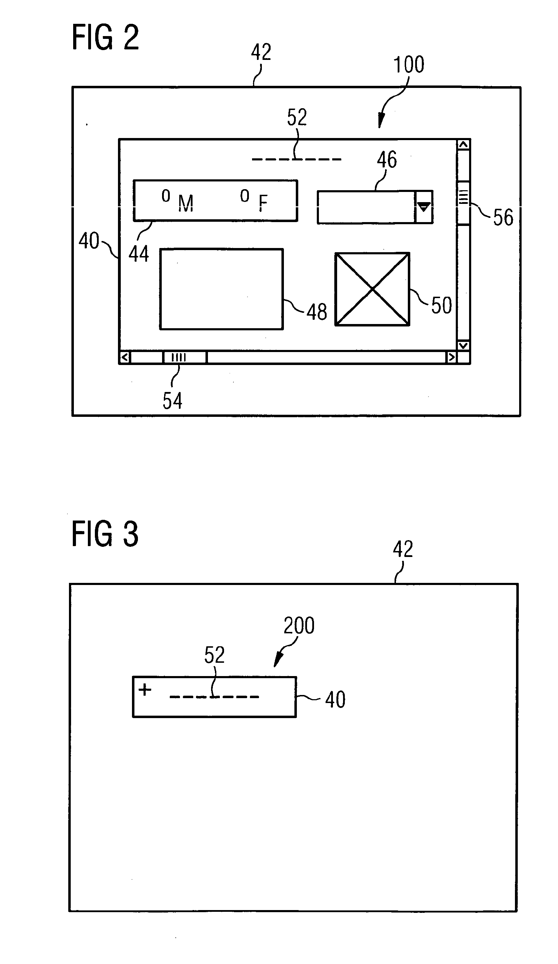

As mentioned earlier, certain applications may require the screen to have more UI controls than it can accommodate or human intelligence can grasp at an instant. Accordingly, the proposed graphical user interface provides means for grouping multiple UI controls into a single control pane 36. A control pane, described in greater detail with reference to FIG 2 and FIG 3 below, is typically a rectangular area within a window 32 that contains a plurality of user-selected UI controls, and can be displayed in an expanded or a folded (minimized) configuration based upon user input. As described hereinafter, the proposed system also allows a user to regroup or customize the UI controls from what is available from the GUI designer.

FIG 2 illustrates an exemplary control pane 40 according to aspects of the present invention. The illustrated control pane 40 is a rectangular area within a window 42 containing multiple UI controls including a check box 44, a drop down list 46, a text area 48 and a picture control 50. These UI controls are typically selected and grouped by the user of the system by dragging and extending the rectangular area over the desired UI controls amongst all UI controls that are displayed on the window 42. From a hierarchical point of view, the control pane 40 may be considered as a parent control to the UI controls 44, 46, 48, 50 that are contained in the control pane 40. The configuration 100 represents an expanded configuration of the control pane 40 displaying all the UI controls that are contained within. FIG 3 illustrates a configuration 200 representing a folded configuration of the control pane 40. The folded configuration 200 displays the control pane 40 in a minimized form along with a control pane identifier 52, such as a control pane name or a label. The control pane identifier 52 allows a user to identify the nature of the UI controls contained within the control pane 40. One example of the above is 'patient demographics.' This could be shown as a single folded control (or control pane), which, when double-clicked on by the user, or when activated with a hot key by the user, would display all UI controls related to patient demographics. The top left corner of the illustrated folded configuration 200 has a '+' sign indicating that the control pane can be expanded. In a typical scenario, all UI controls may be grouped together in a window into one or more control panes. Initially, when the window is displayed, it could display the folded control panes each having an associated label or an identifier. Subsequently, a user may wish to expand a desired folded control pane and activate the relevant UI controls using a mouse, keyboard, or a hot key.

In the expanded configuration 100, the control pane 40 may further comprise a horizontal scroll bar 54 and/or a vertical scrollbar 56. This feature allows all control panes in a window to be expanded at the same time while meeting the space requirements of the screen, which is not possible in any current solution.

The proposed GUI further allows a user to regroup or customize the UI controls from what is available from the GUI designer. If a user decides that the way he/she would like to categorize the UI controls on a window is different from the initial categorization by an earlier user, the proposed GUI allows the user to drag and drop UI controls in or out of the control pane and hence customize the control pane according to need. That means that a UI control that is outside the control pane can be moved into the control pane by the user. Also, if a UI control was within a control pane, it is possible for the user to move it out of the control pane and place it in the screen without a control pane, or into another control pane. The above is achieved by changing the hierarchy of the UI control which is moved in or moved out. The above typically happens when the application program containing the window is executed. Therefore a particular window for an application could appear different to different users. For example, a first user may put all the demographic details of a patient in a particular control pane. A second user might also add the clinical symptoms of the patient also to the same control pane.

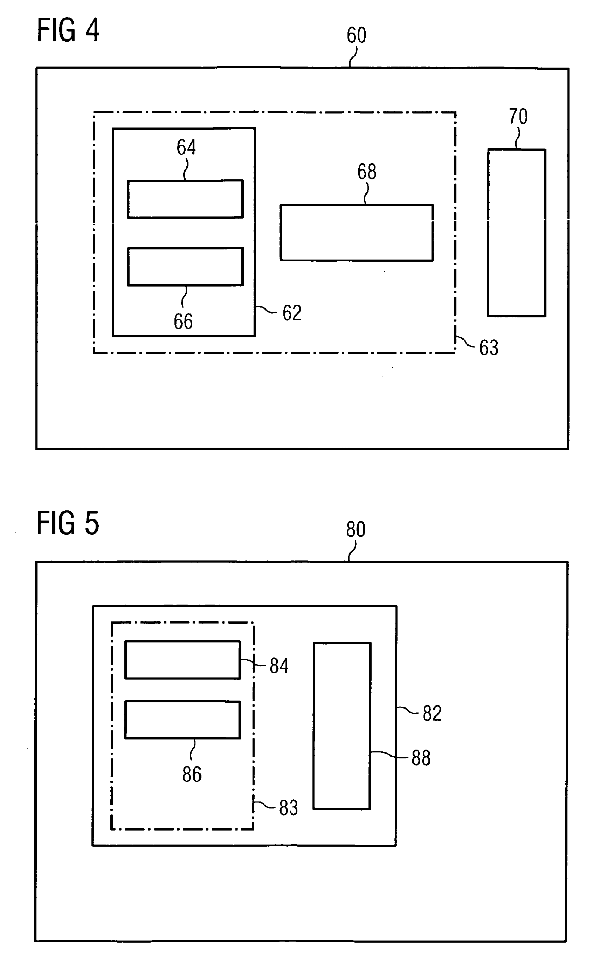

To aid implementation of the present solution, it might be advantageous to move those UI controls into a control pane that are adjacent to the control pane. Likewise, it is advantageous to move out those UI controls from a control pane that are on the periphery of the control pane. The above is illustrated with reference to FIG 4 and FIG 5 respectively. FIG 4 shows a window 60 having a resizable rectangular control pane 62 containing multiple UI controls 64 and 66, while UI controls 68 and 70 lie outside the control pane 62. As illustrated, the UI control 68 is adjacent to the control pane 62. It is possible for a user to move the UI control 68 into the control pane 62 by extending the resizable control pane 62 to include the UI control 68 within it. As can be understood, the above may be carried out by a user input, for example, by dragging the resizable control pane 62 using a mouse. The new configuration of the control pane 62 is illustrated by a dotted rectangle 63. The affected UI control 68 will now have the control pane 62 as its parent pane.

FIG 5 shows a window 80 having a resizable rectangular control pane 82 containing multiple UI controls 84, 86 and 88. As illustrated, the UI control 88 is at the periphery of control pane 82. It is possible for a user to move the UI control 88 out of the control pane 82 by resizing the control pane 82 to exclude the UI control 88. As can be understood, the above may be carried out by a user input, for example, by dragging in the resizable control pane 82 using a mouse. The new configuration of the control pane 82 is illustrated by a dotted rectangle 83. In the illustrated embodiment, the affected UI control 88 has to redefine its parent to be the window 80 when it is brought out of the control pane 80.

The aforementioned embodiments of the proposed solution thus allows the UI screen user to focus on the necessary elements on the screen at a given instant of time. It also solves the problem of limited real estate of the computer screen.

Summarizing, the present invention relates to a graphical user interface in a computer system. The GUI comprises a window containing a plurality of user interface controls. The proposed GUI also includes means for grouping a set of user interface controls, from amongst said plurality of user interface controls, into a single control pane in response to a first user input. The GUI further comprises means for displaying said control pane within said window. The means for displaying is adapted to display said control pane in any one of an expanded configuration and a folded configuration, depending upon a second user input. The expanded configuration displays said control pane with user interface controls that are contained in the control pane, while the folded configuration displays the control pane in a minimized form along with a control pane identifier.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the spirit or scope of the present invention as defined.

## Claims

1. A graphical user interface, comprising:
- a window (42) containing a plurality of user interface controls,
- means for grouping a set of user interface controls (44, 46, 48, 50), from amongst said plurality of user interface controls, into a single control pane (40) in response to a first user input, and
- means for displaying said control pane (42) within said window (42), wherein, said means for displaying is adapted to display said control pane (40) in any one of an expanded configuration (100), displaying said control pane (40) with user interface controls (44, 46, 48, 50) that are contained in the control pane (40), and a folded configuration (200), displaying said control pane (40) in a minimized form along with a control pane identifier (52), depending upon a second user input.

2. The graphical user interface according to claim 1, wherein the expanded configuration (100) of said control pane comprises a resizable rectangular area within said window (40) .

3. The graphical user interface according to any of the preceding claims, wherein the expanded configuration (100) of said control pane (40) comprises a vertical scroll bar (56) and/or horizontal scroll bar (52) configured to facilitate complete display of the user interface controls (44, 46, 48, 50) contained in said control pane (40).

4. The graphical user interface according to any of the preceding claims, further comprising means for moving a user interface control that is outside and adjacent to said control pane into said control pane based upon a third user input, and means for moving a user interface control at a periphery of said control pane out of said control pane based upon a fourth user input.

5. A method for providing a graphical user interface, comprising:
- generating a window (42) containing a plurality of user interface controls and displaying said window (42) on a display screen,
- in response to a first user input, generating a control pane (40) containing a group of user interface controls (44, 46, 48, 50), from amongst said plurality of user interface controls, and
- displaying said control pane (40) within said window in an expanded or a folded configuration depending upon a second user input, wherein said expanded configuration (100) displays the control pane along with user interface controls (44, 46, 48, 50) that are contained in the control pane (40), and said folded configuration (200) displays the control pane (40) in a minimized form along with a control pane identifier (52).

6. The method according to claim 5, further comprising resizing said control pane to move a user interface control that is outside and adjacent to said control pane into said control pane based upon a third user input.

7. The method according to any of claims 5 and 6, further comprising resizing said control pane to move a user interface control at a periphery of said control pane out of said control pane based upon a fourth user input.
